**Europäisches Patentamt**

**European Patent Office**

**Office européen des brevets**

(19)

(11) Veröffentlichungsnummer: **0 012 133**
**B1**

(12) **EUROPÄISCHE PATENTSCHRIFT**

(45) Veröffentlichungstag der Patentschrift: **30.09.81**

(21) Anmeldenummer: **78101712.4**

(22) Anmeldetag: **15.12.78**

(51) Int. Cl.³: **F 16 J 15/34, F 16 F 15/32, F 16 J 15/54**

(54) Dichtung für den Spalt zwischen einer umlaufenden Welle und einer Gehäusebohrung gegenüber einem Gemisch aus einer Flüssigkeit und einem Gas.

(43) Veröffentlichungstag der Anmeldung:
**25.06.80 Patentblatt 80/13**

(45) Bekanntmachung des Hinweises auf die Patenterteilung:
**30.09.81 Patentblatt 81/39**

(84) Benannte Vertragsstaaten:
**CH DE FR GB IT SE**

(56) Entgegenhaltungen:
**DE - A - 2 427 537**
**DE - A - 2 559 667**
**US - A - 3 238 000**
**US - A - 3 601 225**
**US - A - 3 685 838**

(73) Patentinhaber: **Firma Carl Freudenberg**
**Höhnerweg 2**
**D-6940 Weinheim/Bergstrasse (DE)**

(72) Erfinder: **Forch, Hans**
**Sandbuckelweg 29**
**D-6943 Birkenau (DE)**

(74) Vertreter: **Weissenfeld-Richters, Helga, Dr.**
**Höhnerweg 2-4**
**D-6940 Weinheim/Bergstrasse (DE)**

Courier Press, Leamington Spa, England.

## Dichtung für den Spalt zwischen einer umlaufenden Welle und einer Gehäusebohrung gegenüber einem Gemisch aus einer Flüssigkeit und einem Gas

Die Erfindung betrifft eine Dichtung für den Spalt zwischen einer umlaufenden Welle und einer Gehäusebohrung gegenüber einem Gemisch aus einer Flüssigkeit und einem Gas, bei der auf der Welle ein Innenring und in der Gehäusebohrung ein Außenring flüssigkeits- und gas-dicht befestigt ist und bei der der Innenring eine in radialer Richtung bewegliche, ringförmig ausgebildete Dichtlippe aus einem elastomeren Werkstoff aufweist, mit einer nach innen wirkenden Feder, die die Dichtlippe elastisch gegen eine Ringfläche des Außenringes anpreßt.

Schnell laufende Maschinenteile in Getrieben oder in Motoren werden üblicherweise mit einem Ölnebel geschmiert, der mit Hilfe besonderer Düsen erzeugt wird. Um einen Ölverlust zu vermeiden, ist es erforderlich, das Getriebe- oder das Motorengehäuse gegenüber der Umgebung hermetisch zu verschließen. Dabei können im Bereich von Wellendurchführungen bei Verwendung Radialwellendichtringen mit einer Dichtlippe aus elastomeren Werkstoffen insofern Schwierigkeiten auftreten, als der außerordentlich dünne Schmierfilm im Rahmen seiner ständigen Erneuerung nur in einem sehr geringen Maße in der Lage ist, die entstehende Reibungswärme abzuführen.

Eine Dichtung gemäß dem Oberbegriff des Patentanspruchs 1 ist aus DE—OS 24 27 537 bekannt. Sie besteht aus einer mit Rückförderrippen versehenen Spaltdichtung auf der dem Ölstrom zugewandten Seite und aus einer mit dem Innenring verbundenen, ringförmig ausgebildeten Dichtlippe, die bei Wellenstillstand an einem radial nach innen weisenden Vorsprung des Außenringes unter einer elastischen Vorspannung anliegt. Mit zunehmender Wellendrehzahl vermindert sich diese Vorspannung aufgrund der steigenden Fliehkräfte, und es beginnt in zunehmendem Maße eine dynamisch bedingte Rückförderung des bis zu der Dichtlippe vorgedrungenen Öls durch die Rückförderrippen der Spaltdichtung. Der eigentliche Abdichtungsbereich verlagert sich dadurch zunehmend von der Dichtlippe zu der Spaltdichtung, bis diese nach dem Abheben der Dichtlippe von dem radial nach innen weisenden Vorsprung des Außenringes die Abdichtung allein bewirkt. Mit noch weiter steigender Drehzahl der Welle kann es dann allerdings zu einer weitgehenden Entleerung des Dichtspaltes von Öl kommen und gegebenenfalls zu einer unerwünschten Förderung von Umgebungsluft in den abgedichteten Raum hinein. Durch die Abdichtung des Raumes wird diese Strömung aber früher oder später unterbrochen und damit die weitere Umwälzung der im Dichtspalt verbliebenen Restmenge an Schmieröl. In dieser kommt es infolgedessen zu einem Wärmestau und unter Umständen bei hohen Drehzahlen zu Zersetzungserscheinungen, die gegebenenfalls auch negative Begleiterscheinungen an den benachbarten Teilen aus elastomeren Werkstoffen zur Folge haben können.

Die technische Funktion von Dichtungen dieser Art beruht in einem besonders hohen Maße auf einer präzisen Fertigung jedes einzelnen Teiles sowie auf einer besonders präzisen gegenseitigen Zuordnung unter Betriebsbedingungen. Die erstgenannte Forderung hat zwangsläufig außerordentlich hohe Fertigungskosten zur Folge. Die letztgenannte Forderung kann dann nicht erfüllt werden, wenn die abzudichtende Welle betriebsbedingt einen exzentrischen Lauf hat, beispielsweise als Folge von unvermeidbaren Schwingungen.

Aus DE—OS 25 59 667 ist eine berührungsfrei arbeitende, dynamische Wellendichtung bekannt, bei der der abgedichtete Spalt von einem durch die Drehung der Welle aus der Leckflüssigkeit erzeugten Flüssigkeitsring verschlossen wird. Das überschüssige Flüssigkeitsvolumen wird durch speziell an den Zulaufquerschnitt angepaßte Bohrungen zurück in den abgedichteten Raum gefördert. Dabei läßt es sich allerdings nicht vermeiden, daß die ruhenden Teile des Spaltes von dem abgedichteten Medium benetzt werden, und daß dieses an den runden Teilen entlang kriecht und eine Leckage der Dichtung auch unter Betriebsbedingungen bewirkt.

Der Erfindung liegt die Aufgabe zugrunde, eine Dichtung für ein Gemisch aus einer Flüssigkeit und einem Gas zu entwickeln, die bei einer vereinfachten Konstruktion mechanisch unempfindlich ist und die eine durchgehend zuverlässige Abdichtung des Gemisches vom Wellenstillstand bis zu sehr hohen Drehzahlen gewährleistet.

Unter einer vereinfachten Konstruktion wird im Sinne der Erfindung eine Ausführung verstanden, deren Funktion unabhängig ist von der Einhaltung hochpräziser Oberflächen. Unter dem Begriff, daß die Dichtung mechanisch unempfindlich sein soll, wird verstanden, daß ein exzentrischer Lauf der Welle im Bereich üblicher Toleranzen zu keiner Beeinträchtigung des Dichtungseffektes führt. Je nach Ausführung soll es daneben möglich sein, die Dichtung widerstandsfähig gegen hohe Temperaturen auszuführen.

Die Erfindung löst die Aufgabe mit dem kennzeichnenden Teil der Ansprüche. Das wesentliche Merkmal besteht dabei darin, daß der Innenring auf der dem abzudichtenden Medium zugewandten Seite der Dichtlippe einen Flansch trägt, mit einer Stirnfläche, die an einem ringförmig ausgebildeten und radial nach innen weisenden Vorsprung des Außenringes anliegt und mit axial den Flansch durchsetzenden Durchlässen, die über die Stirnfläche verteilt sind und die von einer Vielzahl sich in radialer Richtung erstreckender Durchlässen durchdrungen werden.

Regelmäßig ist eine Vielzahl von Durchlässen in radialer und in axialer Richtung innerhalb des Flansches zu einem labyrinthartigen Hohlraumsystem verbunden, dessen Öffnungen gleichmäßig über die Stirnfläche, den Außenumfang und die dem abzudichtenden Medium zugewandte Seite verteilt sind. Der Flansch ist gegen eine relative Verdrehung in bezug auf den Innenring gesichert, und er folgt deshalb der Drehbewegung der Welle.

Der Flansch liegt mit seiner Stirnfläche unter einer sehr geringen elastisch nachgiebigen Vorspannung an der dem abzudichtenden Medium zugewandten Oberfläche des ringförmig ausgebildeten, sich radial nach innen erstreckenden Vorsprung des Außenringes an. In Abhängigkeit von der zunehmenden Drehzahl kann sich in diesem Bereich aufgrund der wirksamen dynamischen Kräfte ein enger Spalt ausbilden, ohne daß der Dichtungseffekt beeinträchtigt wird.

Im Ruhezustand der Welle wird die Abdichtung wie bei der Dichtung nach dem Oberbegriff durch die Lippendichtung bewirkt. Mit zunehmender Vergrößerung der Drehzahl vermindert sich die Anpreßkraft der Dichtlippe an die zugeordnete Oberfläche des Vorsprunges, und es kommt zu einem Abheben der Dichtlippe.

Die Hohlräume des Flansches enthalten bei Wellenstillstand Luft sowie in unregelmäßiger Verteilung feine Öltröpfchen, die an den einzelnen Wänden anhaften. Mit zunehmender Wellendrehzahl werden sowohl die Öltröpfchen als auch die Luftpartikel in zunehmendem Maße in die Außenzonen des Flansches gefördert und schließlich von dessen Außenumfang abgeschleudert, während das Innere des Flansches über die im Bereich des Innenumfanges liegende Stirnfläche mit neuem Gemisch aufgefüllt wird.

Von wesentlicher Bedeutung in bezug auf den erfindungsgemäß genutzten Effekt ist die Erkenntnis, daß in dem eine schnelle Drehbewegung ausführenden Hohlraumsystem des Flansches eine Entmischung des eintretenden Gemisches, beispielsweise eine Ölnebels, stattfindet, derart, daß die Öltröpfchen unmittelbar nach dem axialen Eintreten in die dem abzudichtenden Medium zugewandte Stirnfläche des Flansches zum Außenumfang abgelenkt werden, während die Luft eine relativ größere Verweilzeit im Bereich des Innendurchmessers hat. Im Bereich der dem abzudichtenden Medium zugewandten Stirnfläche besteht als Folge davon eine überwiegend Öl umfassende Strömung in Richtung auf den Außendurchmesser, im Bereich der von dem abzudichtenden Medium abgewandten Stirnfläche eine überwiegend Luft umfassende Strömung in gleicher Richtung.

Das Verhältnis der beiden Stoffe zueinander im Bereich der beiden Stirnflächen ist abhängig von der Drehzahl, der Dimensionierung und der Art des Hohlraumsystems innerhalb des Flansches. Es ist weiterhin abhängig von der Art und der Viskosität der in dem Gemisch enthaltenen Flüssigkeit. Im Einzelfalle ist es bezüglich der spezifischen Auslegung erforderlich, die verschiedenen Parameter aufeinander abzustimmen. Bestimmte Grundüberlegungen erleichtern jedoch die diesbezügliche Entscheidung:

Eine große axiale Länge im Bereich des Innendurchmessers des Flansches gewährleistet eine besonders gute Entmischung und damit einen besonders guten Dichtungseffekt. Bezüglich der Festlegung der Länge muß aber berücksichtigt werden, daß zwischen der Stirnfläche des Flansches und dem radial nach innen weisenden Vorsprung des Außenringes jederzeit eine ausreichende Schmierung gewährleistet sein muß, während diese zwischen dem Vorsprung und der Dichtlippe nur bei niedrigen Wellendrehzahlen erforderlich ist. Ein dünner, aber in sich vollkommen geschlossener Ölfilm auf allen Teilen der Stirnfläche des Flansches unter Betriebsbedingungen genügt diesem Erfordernis. Dabei ist es von besonderer Bedeutung, daß der Flansch ohne nennenswerte Flächenpressung an dem radial nach innen weisenden Vorsprung des Außenringes anliegt. Es treten infolgedessen nur geringe Reibungskräfte auf. Die Ausbildung eines Spaltes zwischen den beiden Teilen ist nicht erwünscht. Sie hat im allgemeinen weder bei Wellenstillstand noch bei Nenndrehzahl der Welle einen nachteiligen Einfluß auf die Abdichtwirkung, sofern eine gewisse maximale Breite nicht überschritten wird. Der diesbezügliche Wert liegt umso höher, je größer die Nenndrehzahl ist.

Bei Verwendung eines Flansches mit einer vollkommen homogen verteilten Hohlraumstruktur kann es zweckmäßig sein, dessen axiale Länge im Bereich des Außenumfanges relativ zu vermindern, um eine etwa konstante Summe der Querschnittsflächen der Hohlräume in allen vorhandenen Durchmessern zu erzielen. Zweckmäßigerweise wird dabei die an dem Außenring anliegende Stirnfläche als eine sich in radialer Richtung erstreckende Ebene ausgebildet, während die dem abzudichtenden Raum zugewandte Stirnfläche eine konische Gestalt erhält. Alle Außenflächen können im wesentlichen offen sein, um den Öltröpfchen und der Luft ein Austreten zu ermöglichen.

Der Flansch kann in sich eine starre oder eine flexible Gestalt haben. Er kann gleitend auf dem Innenring befestigt sein, wobei als Mitnehmer für die Übertragung der Drehbewegung ein sich in axialer Richtung erstreckender Stift oder ein membranähnlich ausgebildetes Übergangsstück Verwendung finden kann, das einerseits mit dem Innenring und andererseits mit dem Flansch verbunden ist.

Unter Betriebsbedingungen legt sich die Stirnfläche des Flansches aufgrund der von dem durchgeleiteten Gemisch auf ihn ausgeübten dynamischen Kräfte je nach Ausführung selbsttätig an die ihm zugewandte Oberfläche des radial nach innen weisenden Vorsprunges des Außenringes an. Um auch während der Anlaufphase nach einem Wellenstillstand einen zuverlässigen Oberflächenkontakt zwischen den beiden Teilen zu gewährleisten, ist es bei Verwendung eines Flansches aus einem elastischen Werkstoff gegebenenfalls auch möglich, diesen in axialer Richtung bis zur Erzielzng der gewünschten Anpressung gegen den Vorsprung zu verschieben und anschließend durch Anbringen eines Sicherungsringes auf dem Innenring gegen ein Zurückgleiten zu sichern.

Bei sehr größen Wellendrehzahlen, beispielsweise in der Größenordnung von 10 000 min$^{-1}$ in Verbindung mit relativ großen Wellendurchmessern können sich unerwünschte Verformungen und insbesondere eine Durchmesseraufweitung des Flansches ergeben. Solche Verformungen bleiben ohne Auswirkung auf den erzielten Abdichteffekt, wenn eine Spaltbildung zwischen dem Flansch und dem Innenring unterbunden wird. Das kann auf einfache Weise durch ein Verkleben oder ein Verklemmen der Teile untereinander geschehen oder durch Anbringen eines an der dem abzudichtenden Medium zugewandten Stirnfläche anliegenden Spritzringes mit einem Durchmesser, der geringfügig größer ist als der Innendurchmesser des radial nach innen weisenden Vorsprunges des Außenringes.

Die erfindungsgemäße Dichtung läßt sich auf eine besonders einfache Weise herstellen und in Hinblick auf die Gewährleistung einer zuverlässigen Betriebssicherheit montieren. Es stehen bei Nenndrehzahl und in deren weiterem Bereich keinerlei Flächen in einem reibenden Kontakt, der einen nennenswerten Verschleiß an einem Bestandteil der Dichtung zur Folge haben könnte. Die erfindungsgemäße Dichtung läßt deshalb eine außerordentlich große Lebensdauer erwarten.

Einige beispielhafte Ausführungen und Einzelheiten der erfindungsgemäßen Dichtung sind in den beigefügten Zeichnungen dargestellt. Sie werden nachfolgend näher erläutert:

Figur 1 zeigt eine Dichtung in längsgeschnittener Darstellung, bei der der Flansch elastische Eigenschaften hat und bei der die Lippendichtung auf der von dem abzudichtenden Medium abgewandten Seite des Außenringes angeordnet ist.

Figur 2 zeigt eine Auführung der Dichtung mit einem unelastisch ausgebildeten Flansch, der von Federn gegen den radial nach innen weisenden Schenkel des Außenringes gedrückt wird und bei dem die Lippendichtung auf der dem abzudichtenden Medium zugewandten Seite des Außenringes angeordnet ist.

Figur 3 zeigt eine Ausführung der Dichtung, bei der ein flexibel ausgebildeter Flansch durch eine Tellerfeder gegen den radial nach innen weisenden Schenkel des Außenringes angedrückt wird und bei der die Ringlippe der Lippendichtung an einem sich ebenfalls in radialer Richtung erstreckenden Vorsprung der Außenringes anliegt.

Figur 4 zeigt eine Ausführung, bei der ein Flansch in Gestalt eines Ringkolbens Verwendung findet, der unflexibel und in sich starr ausgebildet ist und der in einer sich axial öffnenden Nut des Innenringes gelagert ist.

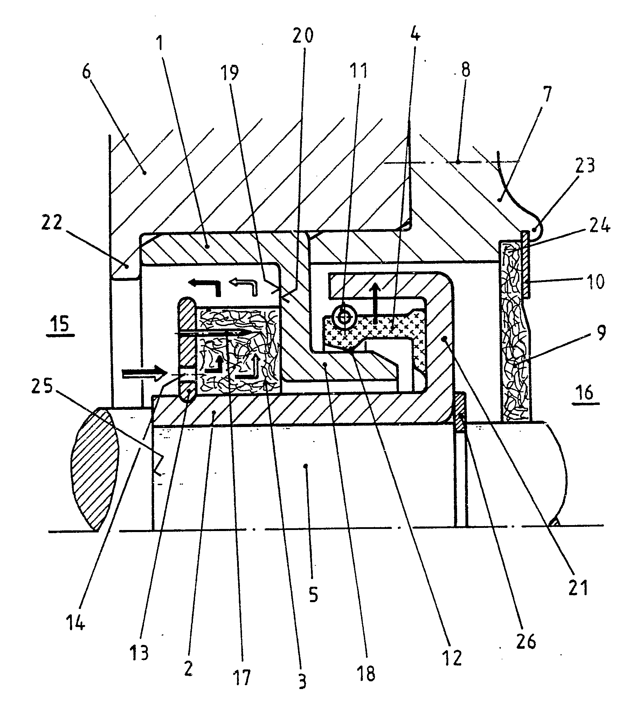

Das Funktionsprinzip der erfindungsgemäßen Dichtung wird besonders deutlich durch den grundsätzlichen Aufbau der Ausführung entsprechend Figur 1. Die Dichtung dient zum Abschließen des einen Ölnebel enthaltenden Raumes 15 gegenüber der Außenluft 16. Die zwischen den beiden Räumen liegende Gehäusewand ist mit 6 bezeichnet, die abzudichtende Welle mit 5.

Die Gehäusebohrung weist auf der dem abzudichtenden Medium zugewandten Seite einen radial nach innen vorspringenden Wulst 22 auf, und der Außenring 1 der Dichtung wird von dem vorspringenden Ring des Deckels 7 und diesem Wulst axial eingespannt. Der Deckel ist mit Hilfe von nicht dargestellten Schrauben 8 an den Gehäuse befestigt.

Der Deckel 7 weist auf der Stirnseite einen Ringwulst 23 auf, der auf der Innenseite eine Aussparung 24 aufweist, die der Welle konzentrisch zugeordnet ist. In der Aussparung 24 ist eine Staubscheibe 9 aus Filz mit Hilfe eines Klemmringes 10 befestigt. Die Staubscheibe liegt gleitend auf der Oberfläche der Welle 5 auf.

Der Innenring 2 der Dichtung ist auf der Welle 5 zwischen dem Bund 25 und dem Klemmring 26 eingespannt. Sein Innendurchmesser ist so auf den Außendurchmesser der Welle abgestimmt, daß ein Hindurchdringen von Flüssigkeit oder Gas nicht möglich ist. Der Innenring kann auch auf der Innenseite mit einer nicht dargestellten Beschichtung aus einem elastomeren Werkstoff versehen sein, die gegebenenfalls mehrere axial hintereinander liegende Rippen aufweist, die mit einer hohen Vorspannung gegen die Oberfläche der Welle gepreßt werden.

Der Innenring ist auf der rechten Seite mit einer Aufbördelung 21 versehen, an die die aus einem gummi-elastischen Werkstoff bestehende Lippendichtung 4 unmittelbar anvulkanisiert ist. Die Dichtlippe 12 der Lippendichtung wird von einer Ringfeder 11 gegen den Außenumfang eines in axialer Richtung vorspringenden, ringförmigen Ansatzes 18 des Außenringes 1 angepreßt. Die dabei bestehende Vorspannung ist so gewählt, daß die Dichtlippe bei Erreichen einer bestimmten Drehzahl der Welle von der Oberfläche des Ansatzes 128 abhebt, so daß sich an dieser Stelle ein Spalt bildet. Diese Drehzahl wird bestimmt durch die Strömungsverhältnisse des Gemisches während dessen Durchgang durch den Flansch 3 und damit von der zunehmenden Verlagerung der Abdichtung von der Dichtlippe in dem Flansch.

Die Drehzahl liegt im allgemeinen in einer Größenordnung von 1000 bis 3000⁻¹.

Als Ringfeder 11 kann gegebenenfalls auch ein Ring mit einem kreisförmigen Profil aus einem elastischen Werkstoff verwendet werden.

Im linken Teil der Darstellung ist auf dem Innenring mit Hilfe einer Klemmscheibe 13 der Flansch 3 verankert. Die Klemmscheibe 13 ist auf dem Umfang mit mehreren in gleichmäßigen Abständen voneinander angeordneten Nadeln 17 aus Metall versehen, die sich axial in das Innere des Flansches 3 hinein erstrecken. Durch die Nadeln wird gewährleistet, daß einerseits die Drehbewegung der Welle unmittelbar auf den Flansch 3 übertragen wird. Andererseits wird durch die Nadeln bei sehr hohen Drehzahlen eine Aufweitung des Flansches in radialer Richtung verhindert, wenn dieser aus einem flexiblen Werkstoff besteht. Die Ansahl der Nadeln ist daher abhängig von der mechanischen Stabilität des Flansches. Sie kann bei üblichen Wellendurchmessern bis 100 mm zwischen 3 und 12 schwanken.

Der dargestellte Flansch 3 besteht aus untereinander verschweißten Fasern aus Polyester mit einem Durchmesser von ca. 0,030 mm. Der Vliesstoff ist relativ hoch verdichtet, und der maximale Abstand der Fasern voneinander liegt in einer Größenordnung des Zwei- bis Vierfachen des mittleren Faserdurchmessers. In Abhängigkeit von dem Fließverhalten des abgedichteten Gemisches kann die Verwendung größerer Fasern in Verbindung mit relativ größeren mittleren Abständen zweckmäßig sein.

Der Klemmring 13 weist eine Vielzahl von über den Umfang verteilten Öffnungen 14 auf, durch die das Gemisch aus dem abgedichteten Raum 15 angesogen und in der dargestellten Weise in die durch einen schwarzen Pfeil gekennzeichnete Ölkomponente und in die durch einen weißen Pfeil gekennzeichnete Luftkomponente zerlegt wird. Die Öffnungen 14 sind im wesentlichen im Bereich des Innenumfanges des Klemmringes 13 angeordnet, und zwar in einer gleichmäßigen Verteilung auf des gesamten Umfang. Der gegenseitige Abstand der Öffnungen voneinander soll nicht größer sein als der Durchmesser in Umfangsrichtung.

Die funktionswichtigen elastischen Eigenschaften des Flansches 3 können auch unter Verwendung andersartiger Werkstoffe erzielt werden, beispielsweise unter Verwendung eines offenzelligen Schaumstoffes oder eines aus Metallfasern bestehenden Vliesstoffes, die durch ein elastisches Bindemittel untereinander verklebt sind. Bei den letztgenannten Ausführungen ist aber im Einzelfalle zu prüfen, ob sich aus der dauernden Überflutung mit den verwendeten Schmierölen bei längerem Gebrauch Veränderungen an den elastischen Eigenschaften ergeben.

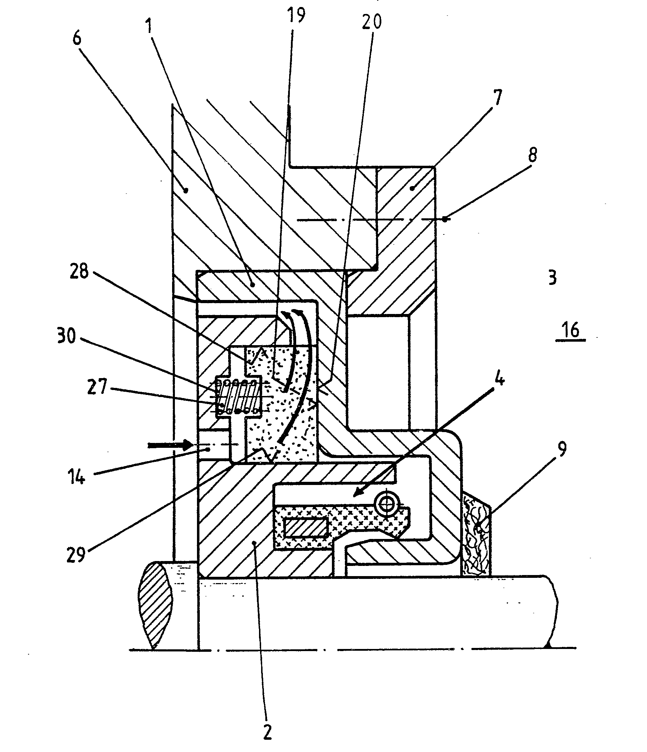

Figur 2 zeigt eine verbesserte Ausführung mit einer verkürzten Baulänge. Die Abweichungen gegenüber der Figur 1 bestehen darin, daß die Lippendichtung 4 auf der dem abzudichtenden Medium zugewandten Seite des Außenringes 1 angeordnet ist und daß der Flansch 3 aus einem unelastischen Körper besteht, der mit Hilfe von weichen Federn 27 gegen den radial nach innen weisenden Vorsprung des Außenringes 1 gedrückt wird. Die Ansaugöffnungen 14 sind auch bei dieser Ausführung im Bereich des Außenumfanges der Welle gleichmäßig auf dem gesamten Umfang verteilt. Sie führen dem Flansch 3 das abzudichtende Gemisch in einem gleichmäßigen Strom zu.

Der Innenring und der Flansch weisen gleichmäßig auf dem Umfang verteilte Aussparungen 30 auf, in denen die weichen Federn 27 gelagert sind, die den Flansch 3 mit seiner Stirnfläche 20 gegen die Oberfläche 19 des Außenringes 1 drücken. Die Ausführung gewährleistet eine außerordentlich große Dauerelastizität, und sie ist deshalb vor allem für Anwendungsfälle geeignet, in denen mit großen Wellenschwingungen gerechnet werden muß. Durch die Federn wird außerdem die Drehbewegung von der Welle auf den Flansch übertragen.

Der Flansch 3 wird zusätzlich durch eine ringförmig umlaufende und sich in axialer Richtung erstreckende Führungsfläche 28 des Innenringes abgestützt. Durch diese zusätzliche Abstützung werden insbesondere bei sehr hohen Drehzahlen unerwünschte Verformungen verhindert. Der Flansch 3 besteht aus untereinander verschweißten oder verklebten Partikeln aus einem Kunststoffgranulat mit einem maximalen Durchmesser von 0,5 bis 0,8 mm. Besonders geeignete Kunststoffe sind Polyamid und PTFE. Es ist ebensogut möglich, metallische Granulate zu verwenden, beispielsweise solche aus Bronze oder Messing, oder Gemische aus unterschiedlichen Granulaten. Um eine innere Verstopfung des Porensystemes zu verhindern, hat es sich in vielen Fällen als zweckmäßig erwiesen, die dem abzudichtenden Gemisch zugewandte Oberfläche mit einer Schicht aus einem Granulat abzudecken, das eine etwas kleinere mittlere Korngröße aufweist. Es ist auch möglich, die Seite gegebenenfalls mit einem abweichenden Filtermaterial abzudecken, beispielsweise mit einer dünnen Gewebe- oder einer Vliesstoffschicht aus einem gegenüber dem abzudichtenden Medium inerten Werkstoff.

Zur Ermöglichung einer vereinfachten Reinigung der Poren des Flansches kann dieser auch zerlegbar ausgebildet sein. Eine nicht dargestellte Ausführung besteht aus einem die Außenflächen des Flansches begrenzenden Käfig auf PTFE, in den das Granulat als eine lose Schüttung eingefüllt ist. Das Schüttvolumen muß dabei so auf das Volumen des Innenraumes abgestimmt sein, daß sich nach dem Einrasten des stirnseitigen Deckels in die Schnappverschlüsse am Außen- und am Innenumfang eine starre gegenseitige Abstützung der Partikel des Granulates ergibt.

Nach einer anderen nicht dargestellten Ausführung besteht der Flansch aus einer Vielzahl von ebenen, kreisförmigen Scheiben, die mit einem Abstand voneinander auf den Innenring aufgefädelt sind und die eine Vielzahl von sich in axialer Richtung erstreckenden Öffnungen haben. Die Scheiben können aus Metall oder Kunststoff bestehen, und sie haben je nach Festigkeit eine Dicke von 0,1 bis 1 mm. Der Abstand kann der Dicke entsprechen. Der Durchmesser der Öffnungen kann Werte im Bereich des Fünf- bis Zehnfachen des Abstandes annehmen.

Um Schwingungen zu verhindern, können die Scheiben weiterhin durch über die ganze Fläche verteilte Nocken aufeinander abgestützt sein, was selbstverständlich voraussetzt, daß die erste und die letzte Platte relativ steifer ausgebildet werden. Das kann neben einer Vergrößerung der Dicke durch eine geänderte Werkstoffauswahl erfolgen oder durch eine gegenseitige Verschraubung. Die Nocken haben auch einen positiven Einfluß auf die Strömungsverhältnisse während des Hindurchfließens des abgedichteten Gemisches durch den Flansch. Um den Effekt zu verstärken, ist es vorteilhaft, die Oberflächen der Scheiben aufzurauhen, beispielsweise durch einen Sandstrahlvorgang.

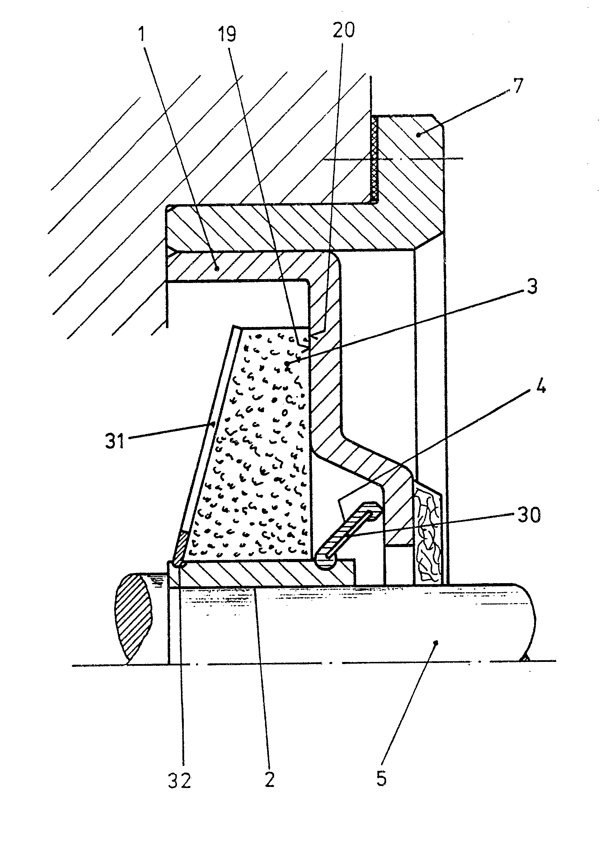

Figur 3 zeigt eine nochmals vereinfachte Ausführung der Dichtung, bei der die Lippendichtung 4 und die Stirnfläche des Flansches des Innenringes 3 an zueinander parallelen und sich in radialer Richtung erstreckenden Flächen des Außenringes 1 anliegen. Die Anpressung der Dichtlippe der Lippendichtung 4 wird dabei durch eine anvulkanisierte Tellerfeder 30 in ähnlicher Weise bewirkt wie bei den vorstehend beschriebenen Ausführungen. Der Außenring ist durch einen Preßsitz in dem Deckel 7 positioniert.

Der Flansch 3 besteht aus einem flexiblen Material, beispielsweise aus einem Vliesstoff oder einem relativ weichen Kunststoffmaterial, beispielswiese aus einem Schaumstoff oder einem zusammengesinterten Kunststoffgranulat. Der Vorsprung wird durch eine sehr weiche Tellerfeder 31 gegen die Kontaktfläche 20 des Außenringes 1 gedrückt. Die Tellerfeder 31 ist in einer Nut 32 des Innenringes abgestützt, und ihr Außendurchmesser entspricht etwa dem Außendurchmesser des Flansches.

Neben dem dargestellten Rechteckprofil der Tellerfeder sind gegebenenfalls auch abweichende Profile möglich, beispielsweise runde Profile. Dabei muß jedoch berücksichtigt werden, daß der gegenseitige Abstand der einzelnen Windungen bei der Verwendung von flexiblen Werkstoffen für den Flansch 3 nicht größer sein darf als dessen geringste axiale Dicke. Bei Verwendung von Tellerfedern aus einem Metallstreifen mit einem runden Profil müssen deshalb relativ mehr Windungen vorhanden sein als bei der dargestellten Ausführung.

Die Dichtung unterscheidet sich von den vorstehend beschriebenen Ausführungen durch die geringste Anzahl von Einzelteilen. Sie läßt sich infolgedessen besonders kostengünstig herstellen. Sie besitzt die kürzeste Baulänge, und die Zuordnung der Lippendichtung zu der zugehörigen Gegenfläche gewährleistet eine absolute Funktionssicherheit auch dann, wenn die Montage ohne besondere Sorgfalt vorgenommen wird. Ein weiterer Vorteil besteht daneben noch darin, daß selbst stauendes Öl, das durch unvorhersehbare Umstände an der Lippendichtung 4 bei Wellenstillstand ansteht, zuverlässig und vollständig in den abgedichteten Raum zurückgefördert wird. Durch das anschließende Erreichen eines Innendruckes in dem abgedichteten Gehäuse in der Größenordnung von ca. $1.962—10^3$ pa kommt der Fördereffekt durch den Flansch 3 aus dieser Richtung zum Erliegen, und der Flansch wird nur noch von dem abzudichtenden Gemisch durchströmt.

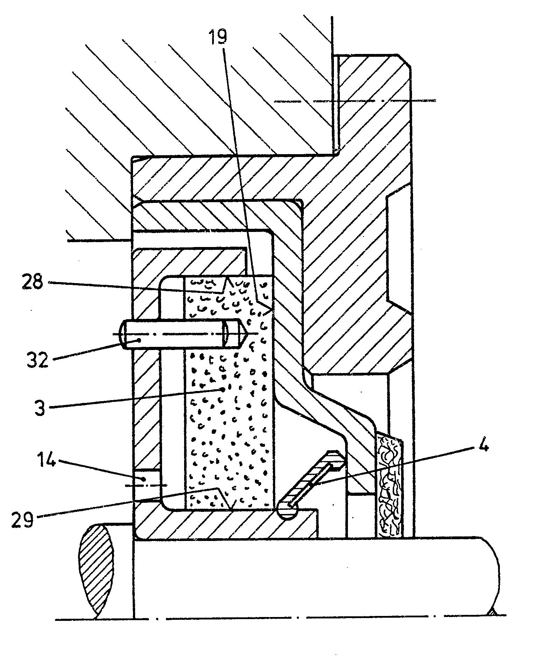

Figur 4 zeigt eine Ausführung der Dichtung, bei der die Lippendichtung und der Flansch wiederum an parallelen und radial nach innen weisenden Flächen des Außenringes 1 anliegen. Die Lippendichtung ist ähnlich aufgebaut wie bei einer Ausführung entsprechend den Figur 3. Der Flansch besteht aus einem in sich steifen und porösen Material, und er ist ähnlich ausgebildet wie ein Ringkolben, der zwischen der Führungsflächen 28 und 29 in axialer Richtung frei beweglich in einer Nut des Innenringes gelagert ist. Die Übertragung der Drehbewegung auf den Flansch 3 wird durch einen oder durch mehrere zylindrisch ausgebildete Mitnehmerstifte bewirkt, die starr in eine Bohrung des Innenringes eingepreßt sind und die mit Spiel in einer Bohrung des Flansches gelagert sind. Der Innenring ist im Bereich des Innendurchmessers mit einer Vielzahl von auf dem Umfang verteilten Bohrungen 14 versehen, durch die das abzudichtende Gemisch angesaugt. Es durchströmt in ähnlicher Weise wie vorstehend beschrieben das Porensystem des Flansches 3, und es findet in gleicher Weise eine Entmischung der beiden Komponenten statt. Die von dem Gemisch auf den Flansch in axialer Richtung ausgeübte Kraft genügt, um ein zuverlässiges Anliegen der Stirnfläche an der Fläche 19 des Außenringes zu gewährleisten. Es erübrigt sich deshalb auch die Verwendung von Andrückfedern.

**Patentansprüche**

1. Dichtung für den Spalt zwischen einer Umlaufenden Welle und einer Gehäusebohrung, bei der auf der Welle ein Innenring (2) und in der Gehäusebohrung ein Außenring (1) flüssigkeits- und gasdicht befestigt ist und bei der der Innenring eine in radialer Richtung bewegliche, ringförmig ausgebildete Dichtlippe (12) aus einem elastomeren Werkstoff aufweist mit einer nach innen wirkenden Feder (11), die die Dichtlippe elastisch gegen eine Ringfläche der Außenringes anpreßt, dadurch gekennzeichnet, daß der Innenring (2) auf der dem abzudichtenden Medium zugewandten Seite der Dichtlippe (12) einen Flansch (3) trägt, mit einer Stirnfläche (20), die an einem ringförmig ausgebildeten und radial nach innen weisenden Vorsprung des Außenringes (1) anliegt, und mit axial den Flansch (3) durchsetzenden Durchlässen, die über die Stirnfläche verteilt sind und die von einer Vielzahl sich in radialer Richtung erstreckender Durchlässen durchdrungen werden.

2. Dichtung nach Anspruch 1, dadurch gekennzeichnet, daß der Flansch (3) aus einer Vielzahl untereinander verklebter oder verklammerter Körper besteht, die selbst keine Flüssigkeit aufzunehmen vermögen.

3. Dichtung nach Anspruch 1 bis 2, dadurch gekennzeichnet, daß die Körper regelmäßig oder unregelmäßig geformte Kunststoff- oder Metallpartikel sind, deren kleinster Durchmesser wenigstens dem 0,5-fachen Wert des größten Durchmessers entspricht.

4. Dichtung nach Anspruch 3, dadurch gekennzeichnet, daß der größte Durchmesser einen Wert von 0,3 bis 1 mm aufweist.

5. Dichtung nach Anspruch 3 bis 4, dadurch gekennzeichnet, daß der Durchmesser der Partikel im Bereich der Anströmfläche kleiner ist als in dem übrigen Flansch.

6. Dichtung nach Anspruch 2 bis 5, dadurch gekennzeichnet, daß die Partikel aus Messing, Zinn, Bronze oder PTFE bestehen.

7. Dichtung nach Anspruch 1 bis 2, dadurch gekennzeichnet, daß die Körper Fasern sind mit einem Durchmesser von wenigstens 0,03 mm.

8. Dichtung nach Anspruch 7, dadurch gekennzeichnet, daß der Durchmesser der Fasern im Bereich der Anströmfläche kleiner ist als in dem übrigen Flansch.

9. Dichtung nach Anspruch 7 bis 8, dadurch gekennzeichnet, daß die Fasern aus Messing, Stahl, Polyester oder PTFE bestehen.

10. Dichtung nach Anspruch 1 bis 2, dadurch gekennzeichnet, daß die Körper gelochte und gegebenenfalls mit Prägungen versehene, kreisringförmige Scheiben sind, die in einem Abstand voneinander auf dem Innenring gelagert sind.

11. Dichtung nach Anspruch 10, dadurch gekennzeichnet, daß die Scheiben aus Bronze, Messing, Stahl, Polyamid oder PTFE bestehen.

12. Dichtung nach Anspruch 1, dadurch gekennzeichnet, daß der Flansch aus einem synthetisch hergestellten, offenzelligen Schaumstoff besteht.

13. Dichtung nach Anspruch 1 bis 12, dadurch gekennzeichnet, daß der Flansch in axialer Richtung elastische Eigenschaften aufweist und daß er in einem solchen axialen Abstand von dem nach innen weisenden Vorsprung des Außenringes mit dem Innenring verbunden ist, daß die Stirnfläche (20) unter einer Vorspannung an dessen Oberfläche (19) anliegt.

14. Dichtung nach Anspruch 1 bis 13, dadurch gekennzeichnet, daß der Flansch in axialer Richtung beweglich an dem Innenring befestigt ist und daß Federelemente vorgesehen sind, die ihn mit der Stirnfläche an den nach innen weisenden Vorsprung des Außenringes andrücken.

15. Dichtung nach Anspruch 1 bis 13, dadurch gekennzeichnet, daß der Flansch axial beweglich zwischen den Führungsflächen (28/29) des Innenringes (3) gelagert und gegen eine relative Verdrehung durch Mitnehmer (32) gesichert ist und daß die äußere Führungsfläche einen Abstand von dem radial nach innen weisenden Vorsprung des Außenringes aufweist.

**Claims**

1. A seal for the gap between a rotating shaft and a housing bore where an inner ring (2) is secured on the shaft and an outer ring (1) is secured in the housing bore, both impermeable to liquid and gas and where the inner ring has a radially movable annular sealing lip (12) of an elastomeric material with an inwardly acting spring (11) which presses the sealing lip resiliently against an annular surface of the outer ring, characterized in that the inner ring (2) bears on the side of the sealing lip (12) towards the medium to be sealed off, a flange (3) with an end face (20) which rests against an annular and inwardly jutting shoulder of the outer ring (1) and apertures located axially through the flange (3) distributed over the end face and which are penetrated by a plurality of apertures extending in a radial direction.

2. A seal according to claim 1, characterized in that the flange consists of a plurality of bodies which are glued or clamped together and which are themselves unable to absorb any liquid.

3. Seal according to claims 1 to 2, characterized in that the bodies are plastic or metal particles with regular or irregular shape, the minimum diameter of which is at least 0,5 times the maximum diameter.

4. Seal according to claim 3, characterized in that the maximum diameter has a value of 0,3 to 1 mm.

5. Seal according to claims 3 to 4, characterized in that the diameter of the particles in the range of the face exposed to the gas and liquid flow is less than in the rest of the flange.

6. Seal according to claims 2 to 5, characterized in that the particles consist of brass, tin, bronze or polytetrafluoroethylene.

7. Seal according to claims 1 to 2, characterized in that the bodies are fibres with a diameter of at least 0,03 mm.

8. Seal according to claim 7, characterized in that the diameter of the fibres in the region of the face exposed to the gas and liquid flow is smaller than in the rest of the flange.

9. Seal according to claims 7 to 8, characterized in that the fibres are made of brass, steel, polyester or polytetrafluoroethylene.

10. Seal according to claims 1 to 2, characterized in that the bodes are perforated, circular discs which may be embossed and which are mounted at a distance from each other on the inner ring.

11. Seal according to claim 10, characterized in that the discs are made of bronze, brass, steel polyamide or polytetrafluoroethylene.

12. Seal according to claim 1, characterized in that the flange is made from a synthetically produced, open-cellular expanded plastic.

13. Seal according to claims 1 to 12, characterized in that the flange has resilient properties in the axial direction and that it is joined with the inner ring at an axial distance from an inwardly jutting shoulder of the outer ring such that its end face (20) rests against the shoulder (19) under an initial pressure.

14. Seal according to claims 1 to 13, characterized in that the flange is secured to the inner ring in an axially movable manner and that spring units are provided which press it with its end face against the inwardly jutting shoulder of the outer ring.

15. Seal according to claims 1 to 13, characterized in that the flange is mounted in an axially movable manner between the guide surfaces (28/29) of the inner ring (3) and is secured against relative rotation by drive means (32) and the outer guide surface is at a distance from the radially inwardly jutting shoulder of the outer ring.

## Revendications

1. Dispositif d'étanchéité du jeu qui existe entre un arbre tournant et un alésage de carter, dans lequel une bague interne (2) fixée sur l'arbre et une bague externe (1) fixée dans l'alésage du carter assurent l'étanchéité à l'égard d'un liquide et d'un gaz et dans lequel la bague interne présente une lèvre d'étanchéité (12), en matériau élastomère, mobile en direction radiale, de forme annulaire et comportant un ressort (11) dont l'action est dirigée vers l'intérieur et qui appuie élastiquement la lèvre d'étanchéité contre une surface annulaire de la bague externe, caractérisé en ce que la bague interne (2) porte, du côté de la lèvre d'étanchéité (12) tournée vers le milieu dont il faut assurer l'étanchéité, une collerette (3) comportant une surface frontale (20) qui s'appuie contre un épaulement, de forme annulaire et dirigé radialement vers l'intérieur, de la bague externe (1) et comportant des passages qui traversent axialement la collerette (3), sont répartise sur la surface frontale et sont pénétrés par un grand nombre de passages qui s'étendent en direction radiale.

2. Dispositif d'étanchéité selon la revendication 1, caractérisé en ce que la collerette (3) est constituée d'un grand nombre d'éléments collés ou bridés entre eux et qui, par eux-mêmes, ne peuvent pas absorber de liquide.

3. Dispositif d'étanchéité selon les revendications 1 à 2, caractérisé en ce que les éléments sont des particules de plastique ou des particules métalliques de forme régulière ou irrégulière, dont le plus petit diamètre correspond au moins à la moitié du plus grand.

4. Dispositif d'étanchéité selon la revendication 3, caractérisé en ce que le plus grand diamètre présente une valeur allant de 0,3 à 1 mm.

5. Dispositif d'étanchéité selon les revendications 3 à 4, caractérisé en ce que le diamètre des particules est plus faible dans la zone de la surface côté arrivée que dans le reste de la collerette.

6. Dispositif d'étanchéité selon les revendications 2 à 5, caractérisé en ce que les particules sont en laiton, en étain, en bronze ou en PTFE (polytétrafluoréthylène).

7. Dispositif d'étanchéité selon les revendications 1 à 2, caractérisé en ce que les éléments sont des fibres d'un diamètre d'au moins 0,03 mm.

8. Dispositif d'étanchéité selon la revendication 7, caractérisé en ce que le diamètre des fibres est plus petit dans la zone de la surface côté arrivée que dans le reste de la collerette.

9. Dispositif d'étanchéité selon les revendications 7 à 8, caractérisé en ce que les fibres sont en laiton, acier, polyester ou PTFE.

10. Dispositif d'étanchéité selon les revendications 1 à 2, caractérisé en ce que les éléments sont des disques de forme annulaire, perforés et présentant éventuellement des estampages, placés à une certaine distance l'un de l'autre sur la bague interne.

11. Dispositif d'étanchéité selon la revendication 10, caractérisé en ce que les disques sont en bronze, en laiton en acier, en polyamide ou en PTFE.

12. Dispositif d'étanchéité selon la revendication 1, caractérisé en ce que la collerette est en un matériau type mousse à cellules ouvertes, de fabrication synthétique.

13. Dispositif selon les revendications 1 à 12, caractérisé en ce que la collerette présente des caractéristiques en direction axiale; et en ce qu'elle est liée à la bague interne à une distance axiale de l'épaulement, et dirigée vers l'extérieur, de la bague externe telle que la face frontale (20) s'appuie avec précontrainte, contre sa surface (19).

14. Dispositif d'étanchéité selon les revendications 1 à 13, caractérisé en ce que la collerette est fixée contre la bague interne avec possibilité de déplacement en direction axiale; et en ce qu'il est prévu des éléments élastiques qui l'appuient, par sa surface frontale, contre l'épaulement, dirigé vers l'intérieur, de la bague externe.

15. Dispositif d'étanchéité selon les revendications 1 à 13, caractérisé en ce que la collerette est logée, avec possibilité de déplacement axial, entre les surfaces de guidage (28/29) de la bague interne (3) et est assurée par un entraîneur (32) à l'égard d'une rotation relative, et en ce que la surface de guidage externe soit à une certaine distance de l'épaulement, dirigé radialement vers l'intérieur, de la bague externe.

**O O 12 133**

1